**Europäisches Patentamt**

**European Patent Office**

**Office européen des brevets**

(19)

(11) Veröffentlichungsnummer : **0 144 665**
**B1**

(12) **EUROPÄISCHE PATENTSCHRIFT**

(45) Veröffentlichungstag der Patentschrift :
25.05.88

(51) Int. Cl.⁴ : **H 04 Q   7/04**

(21) Anmeldenummer : **84112697.2**

(22) Anmeldetag : **20.10.84**

(54) Verfahren zur Verbindungsherstellung mit einem mobilen Teilnehmer und System zur Durchführung.

(30) Priorität : **08.12.83 DE 3344961**

(43) Veröffentlichungstag der Anmeldung :
**19.06.85 Patentblatt 85/25**

(45) Bekanntmachung des Hinweises auf die Patenterteilung : **25.05.88 Patentblatt 88/21**

(84) Benannte Vertragsstaaten :
**DE FR GB IT NL SE**

(56) Entgegenhaltungen :
**DE-A- 2 042 710**
**DE-A- 2 056 349**
**DE-A- 2 739 561**
**US-A- 4 178 476**
**NTZ, Band 34, Heft 3, 1981, BERLIN (DE), S. 178, J. GABEL: "Japan plant Satelliten-Autotelefone"**
**PROCEEDINGS OF THE NATIONAL ELECTRONIC CONFERENCE, Band 33, 29-31. Oktober 1979, Seiten 432-437, R.E. ANDERSON: "Satellite-aided mobile telephone system"**
**ICC'82 CONFERENCE RECORD OF IEEE. INTERNATIONAL CONFERENCE ON COMMUNICATIONS, Band 3, 13.-17. Juni 1982, Seiten 7H.4.1-7H.4.6. IEEE, NEW YORK, (US), T. FREYGARD: "Feasibility of international transport communications system"**

(73) Patentinhaber : **ANT Nachrichtentechnik GmbH**
**Gerberstrasse 33**
**D-7150 Backnang (DE)**

(72) Erfinder : **Koch, Harry, Dipl.-Ing.**
**Burgstrasse 9**
**D-3006 Burgwedel 3 (DE)**

(74) Vertreter : **Wiechmann, Manfred, Dipl.-Ing.**
**ANT Nachrichtentechnik GmbH Gerberstrasse 33**
**Postfach 11 20**
**D-7150 Backnang (DE)**

# Beschreibung

Die Erfindung betrifft ein Verfahren, wie im Oberbegriff des Patentanspruchs 1 angegeben, sowie ein System zur Durchführung des Verfahrens. Ein solches Verfahren ist beschrieben in Proceedings of the National Electronic Conference, Band 33, 29. bis 31. Oktober 1979, R. E. Anderson u. a. : « Satelliteaided mobile telephone system », Seite 435 linke Spalte bis rechte Spalte, Zeile 3. In dieser Veröffentlichung ist vorgeschlagen, daß der mobile Funkempfänger den ihm geltenden Ruf, also seine vom Satelliten flächendeckend zurückgesendete Teilnehmernummer direkt vom Satelliten empfängt. Dies ist vermittlungstechnisch die einfachste Lösung, die aber beim Funkempfänger und/oder Satelliten einen hohen funktechnischen Aufwand erfordert ; die Funkempfänger müssen nämlich hochempfindliche und für den Satellitenempfang geeignete Antennen und Eingangsverstärker und/oder der Satellit eine hohe Sendeleistung haben. Handelt es sich bei den Funkempfängern um tragbare Taschen-Rufempfänger, so sind diese Anforderungen schwer zu erfüllen.

Ein ähnliches Verfahren, wie im Oberbegriff des Patentanspruches 1 angegeben, jedoch ohne daß dabei eine Satellitenübertragung erwähnt ist, ist aus der deutschen Offenlegungsschrift 2 056 349 bekannt ; es ist für den Fall vorgesehen, daß nicht bekannt ist, in welchem Funkverkehrsbereich sich eine bewegliche Funksprechstelle befindet. Für diesen Fall wird ausgehend von einer ortsfesten Fernsprechstelle durch Zwischenschaltung einer zentralen Leitstelle, der mehrere Bezirkssender zugeordnet sind, eine bewegliche Funksprechstelle ohne Anwahl mehrerer Funkverkehrsbereiche gefunden und die eigentliche Sprechverbindung von der beweglichen Funksprechstelle ausgehend zur ortsfesten Funksprechstelle aufgebaut.

Aus der US-Patentschrift 4,178,476 ist ein Rufsystem bekannt mit sogenannten « satellite paging stations », bei denen es sich jedoch um Tochterstationen zu einer Transit-Station handelt. Die Tochter- und die Transit-Stationen sind erdgebundene, ortsfeste Stationen. Allerdings ist am Ende der Zusammenfassung der US-Patentschrift ausgeführt, daß an Stelle des nationalen Telefonwählnetzes auch andere Übertragungsmedien benutzt werden können, z. B. Paketdatenvermittlungsnetze, Satelliten-Übertragungs- und Daten-Netze und Telegrafievermittlungsnetze. Unklar bleibt dabei, welche der Strecken vom ortsfesten Teilnehmer bis zum mobilen Teilnehmer durch eine Satellitenübertragung bewerkstelligt werden soll.

Gegenüber dem erstgenannten Stand der Technik ist es Aufgabe der Erfindung, ein Verfahren anzugeben, das mit einem geringeren funktechnischen Aufwand zumindest für die Funkempfänger auskommt.

Diese Aufgabe wird gelöst durch das Verfahren mit den Merkmalen des Patentanspruches 1, sowie durch das System zur Durchführung des Verfahrens nach Anspruch 5. Bei diesem Verfahren empfangen die Funkempfänger die ihnen zugedachten Funkrufe mit ihrer Teilnehmernummer nicht unmittelbar vom Satelliten, sondern von einem von mehreren regionalen Sendeempfängern, die über diejenige Fläche verteilt auf der Erde plaziert sind, welche der Satellit flächendeckend mit abgestrahlten, gesuchten Teilnehmernummern (Rufsignalen) versorgt.

Welcher stationäre oder welche der stationären Sendeempfänger die vom Satelliten empfangene Teilnehmernummer tatsächlich zur Weiterleitung an den Funkempfänger ausstrahlt, kann dabei vom ortsfesten Teilnehmer bestimmt werden, indem dieser außer der gesuchten Teilnehmernummer auch noch eine Nummer wählt, die angibt, durch welchen bzw. durch welche stationären Sendeempfänger die gesuchte Teilnehmernummer abgestrahlt werden soll.

Wie bereits aus Funksystemen für Personenruf in Städten oder für landesweiten Personenruf bekannt, kann dem Funkempfänger des mobilen Teilnehmers über den Satelliten und den zwischengeschalteten, stationären Sendeempfänger neben seiner eigenen Teilnehmernummer auch mindestens ein weiteres Signal, beispielsweise die Teilnehmernummer des rufenden, ortsfesten Teilnehmers (zur optischen Anzeige im mobilen Funkempfänger) oder auch eine Sprachdurchsage übermittelt werden.

Außerdem ist es möglich, das neue Verfahren in Verbindung mit Verfahrenselementen zu benutzen, die in der nicht vorveröffentlichten europäischen Patentanmeldung 83 110 314 beschrieben sind, so daß zwar der Aufbau einer Fernsprech-Verbindung von einem ortsfesten Fernsprechnetz zu einem mobilen Teilnehmer über einen Satelliten und einen Sendeempfänger erfolgt, worauf dann aber das Ferngespräch selbst über das Fernsprechnetz und eine Funkverbindung abgewickelt wird, die zwischen dem mobilen Teilnehmer und einer Funküberleitzentrale des Fernsprechnetzes hergestellt wird.

Mit dem Verfahren nach der Erfindung lassen sich systembedingte Schwierigkeiten umgehen, die bei bisher vorgeschlagenen, landesweiten, terrestrischen Rufsystemen auftreten : Für solche Funkrufsysteme auf Länderebene sind nämlich mehrere hundert Sender nötig, für deren Modulationszubringer ein umfangreiches Kabelnetz erforderlich ist. Um Interferenzstörungen durch zeitversetzte Modulationssignale in einem mit mehreren Sendern betriebenen Gleichkanalfunknetz zu verhindern, ist der Ausgleich der Laufzeitunterschiede erforderlich. Dazu müssen alle Leitungen des Kabelnetzes, die zu denjenigen Sendern führen, die simultan senden, auf die größte Laufzeit der im Netz vorhandenen Leitung abgeglichen werden. Dennoch ergeben sich im Betrieb eines solchen Netzes immer wieder Störungen, weil die Leitungsabschnitte kein genügend konstantes Laufzeitverhalten aufweisen oder ein nicht kontrollierbares Umschalten in Verteilerstationen erfolgt. Wird statt eines Kabelnetzes wegen größerer Entfernungen auf Richtfunkstrekken übergegangen, so ist ein Laufzeitausgleich ebenfalls schwierig durchzuführen, da die dabei verwendeten aktiven Umsetzer unterschiedliches und zeitlich nicht genügend konstantes Laufzeitverhalten aufweisen. Aus diesem Grund hat man bisher angestrebt, Gleichwellenfunksysteme möglichst nur auf den Nahbereich zu beschränken, wo man mit Niederfrequenzkabeln oder Pupinleitungen noch den gewünschten Entfernungsbereich überbrücken kann. Dann muß das zu versorgende Gebiet in mehrere Regionen aufgeteilt werden, die jeweils im Gleichwellenfunkbetrieb versorgt werden. Zur Vermeidung von Zeitdifferenzen bei Modulationssignalen, die in den Überlappungsgebieten unterschiedlicher Regionen von unterschiedlichen Gleichwellenfunknetzen herrühren, müssen einander benachbarte Gleichwellenfunknetze im Zeitschlitzverfahren senden. Es können beispielsweise drei Zeitschlitze vorgesehen sein, so daß sich Sender von unterschiedlichen Gleichwellenfunknetzen (also von unterschiedlichen Regionen) nicht zeitgleich überlappen können. Sofern für die verschiedenen Regionen nur eine Funkfrequenz zur Verfügung steht, sinkt durch die Anwendung des Zeitschlitzverfahrens die Zahl der möglichen Rufteilnehmer auf 33 % derjenigen Zahl, die möglich wäre, wenn in allen Regionen dauernd gesendet werden könnte.

Solche Systembeschränkungen lassen sich durch die Erfindung weitgehend vermeiden, indem man die Modulationssignale zu den Sendeempfängern über eine Satelliten-Erde-Übertragungsstrecke leitet. Die Rufzentrale leitet die Rufsignale, die aus dem öffentlichen Fernsprechnetz kommen, über eine oder mehrere Bodenstationen zum Satelliten.

Über eine Antenne, die beispielsweise die ganze Bundesrepublik Deutschland ausleuchtet, werden die Rufsignale zum Boden abgestrahlt und von Sendeempfängern empfangen, die beispielsweise jeweils in Rufzentralen angeordnet sein können. Diese Sendeempfänger setzen die empfangenen Rufsignale in das Basisband um und modulieren damit den Sender des Sendeempfängers, der die Rufsignale wieder absetzt.

Sofern keine Sprachübermittlung vorgesehen ist, wird für die Übertragung der Rufsignale über den Satelliten ein fest geschalteter Telefonkanal benötigt, wenn bei einer Bitrate von 1024 Bit/s bis zu $10^6$ Funkteilnehmer angeschlossen werden sollen, wobei zugrunde gelegt ist, daß als Rufsignale jeweils insgesamt 20 Zeichen (für die zu suchende Teilnehmernummer und die Teilnehmernummer des ortsfesten Teilnehmers) übertragen werden sollen.

Die Funkverbindung Satellit-Erde hat eine konstante Laufzeit von 125 ms und ist für ein Gebiet von der Größe der Bundesrepublik Deutschland für alle Sendeempfänger nahezu gleich groß. Der Unterschied in der Laufzeit zu einander benachbarten Regionen ist klein gegenüber der zulässigen Zeitdifferenz von 240 µs, die zur Vermeidung von Interferenzstörungen durch zeitversetzte Modulationssignale eingehalten werden muß.

Nimmt man für den Abstand von Sendeempfängern, deren Sender jeweils eine eigene Region versorgen, ein Maximum von 50 km an, so ergibt sich eine Laufzeitdifferenz von 17 µs für die Modulationssignale einander benachbarter Sender. Die größere Laufzeitdifferenz zwischen Nord- und Süddeutschland kommt nicht zum Tragen, wenn eine Aufteilung in kleinere Regionen, insbesondere Nahbereiche, vorgenommen wird, so daß es infolge mindestens einer dazwischen angeordneten Region (bzw. Nahbereiches) nicht zu einer Überlappung zwischen Aussendungen in einer norddeutschen und solchen in einer süddeutschen Region kommen kann. Die Laufzeitdifferenz von Sendern einander benachbarter Regionen bleibt somit immer in einer vernachlässigbaren Größenordnung. Eine besondere Laufzeitentzerrung für die über den Satelliten geführten Modulationssignale ist nicht erforderlich. Darüber hinaus kann im gesamten Gebiet (Bundesrepublik Deutschland) simultan und mit ein und derselben Trägerfrequenz gesendet werden, so daß keine Zeitschlitze erforderlich sind, welche die Rufkapazität reduzieren.

Anhand der Zeichnungen wird die Erfindung näher beschrieben.

Figur 1 zeigt die Aufteilung eines Gebietes in Regionen und

Figur 2 ein Schema für den Systemaufbau.

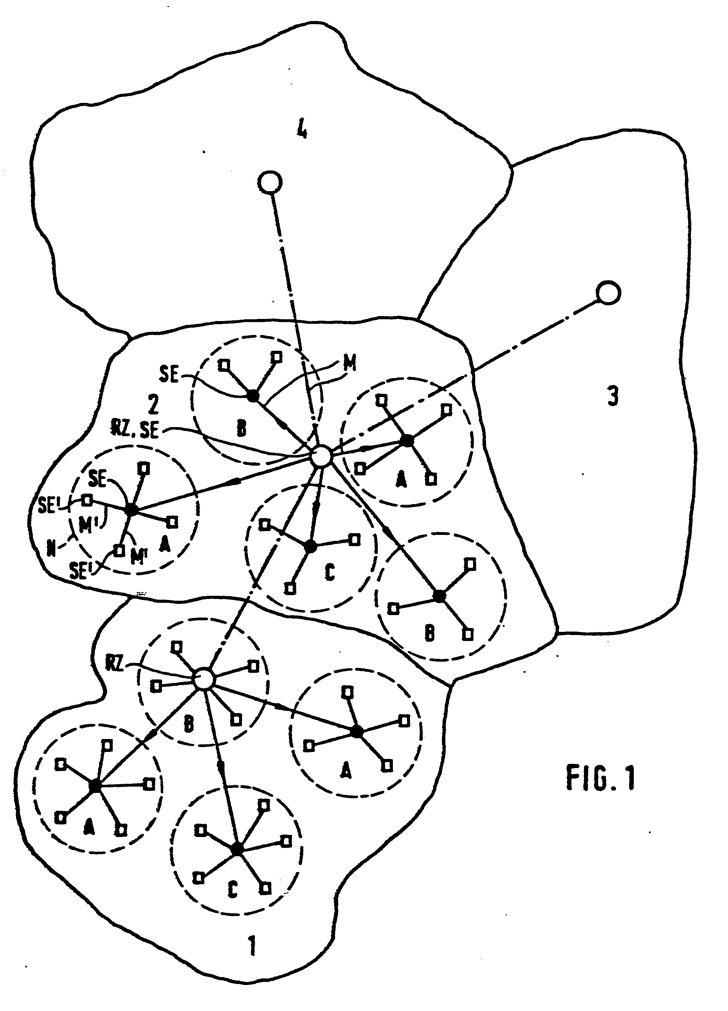

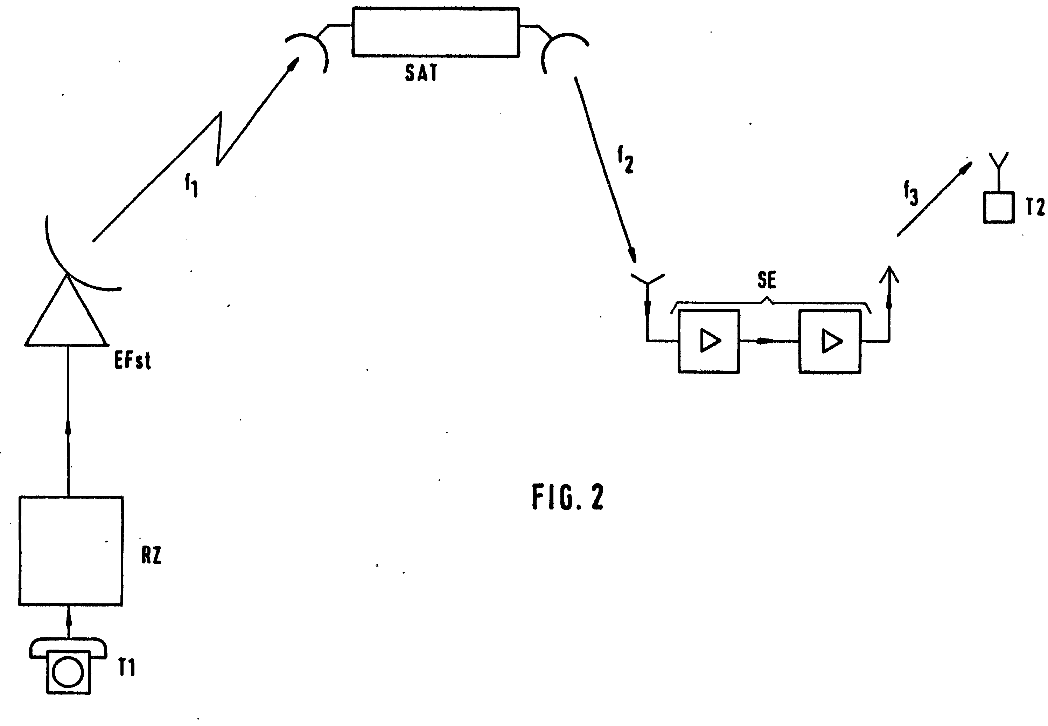

Als mobiler Teilnehmer T2 ist in Figur 2 ein Rufempfänger vorgesehen. Um ihn zu rufen, wählt ein ortsfester Teilnehmer T1 die Teilnehmernummer des gesuchten, mobilen Teilnehmers T2, gegebenenfalls eine zu übermittelnde Nachricht (beispielsweise die eigene Telefonnummer des ortsfesten Teilnehmers T1) und möglicherweise noch eine Codenummer für die Region oder denjenigen Nahbereich, in welchem der mobile Teilnehmer T2 zu suchen ist. All diese Signale gelangen über ein nicht weiter dargestelltes Fernsprechnetz zu einer Rufzentrale RZ, von dort zu einer Erdfunkstelle EFSt, von wo sie mit einem Träger der Frequenz $f_1$ zu einem Satelliten SAT gefunkt werden, der lediglich als Relaisstelle dienen kann und die Signale flächendeckend auf wenigstens einen Nahbereich zurücksendet, und zwar mit Hilfe einer Trägerfrequenz $f_2$. Bevorzugt alle Sendeempfänger SE des in Figur 1 dargestellten Gebietes nehmen diese Signale auf und mindestens einer leitet sie drahtlos mit einer Trägerfrequenz $f_3$ an den im Versorgungsgebiet des Sendeempfängers SE befindlichen mobilen Teilnehmer T2 weiter. Die Sendeempfänger sind in dem in Figur 1 dargestellten Gebiet jeweils an den ebenfalls mit SE bezeichneten Standorten aufgestellt, also jeweils ungefähr im Zentrum eines Nahbereiches N. Die Standorte der Rufzentralen RZ sind ebenfalls mit RZ bezeichnet. Außerdem ist in Figur 1 die Aufteilung in Großregionen 1 bis 4 eingezeichnet, die bei solchen Rufsystemen zweckmäßig ist, beispielsweise um mehrere solcher Nahbereiche N zusammenzufassen, auf die ein Ruf beschränkt bleiben soll. Bisher mußten bei einem solchen System die Rufsignale über die eingezeichneten Modulationszubringerleitungen M herangeführt werden, und zur Vermeidung von Interferenzstörungen in den Randgebieten der Nahbereiche mußte im Zeitschlitzverfahren derart gesendet werden, daß von drei einander unmittelbar benachbarten Nahbereichen A, B, C abwechselnd immer nur in einem Nahbereich gesendet wurde. Durch die Erfindung können diese Modulationszubringerleitungen entfallen, und es kann in allen Nahbereichen A, B, C ständig und gleichzeitig auf derselben Trägerfrequenz f₃ (also im Gleichwellenfunkbetrieb) und bedarfsweise dasselbe Rufsignal ausgesendet werden, weil Interferenzstörungen in Folge von Laufzeitabweichungen auf Modulationszubringerleitungen M entfallen.

Werden die Sendeempfänger (ausschließlich oder zusätzlich) in den Standorten SE' eingesetzt (wobei dann auch die Sender dieser Sendeempfänger SE' jeweils eines Nahbereiches N im Gleichwellenfunkbetrieb arbeiten), so können auch noch sonst eventuell notwendige Nahbereich-Modulationszubringerleitungen M entfallen.

**Patentansprüche**

1. Verfahren zum Herstellen einer Verbindung zwischen einem an ein Fernsprechnetz angeschlossenen, ortsfesten Teilnehmer und einem mit einem Funkempfänger ausgestatteten, mobilen Teilnehmer, wobei der ortsfeste Teilnehmer (T1) unter Angabe der Teilnehmernummer des gesuchten, mobilen Teilnehmers (T2) eine mit dem Fernsprechnetz verbundene Rufzentrale (RZ) anwählt, welche diese gesuchte Teilnehmernummer an eine Erdfunkstelle (EFSt) übermittelt, von der aus sie zu einem Satelliten (SAT) gerichtet ausgesendet wird, worauf der Satellit die Teilnehmernummer zur Erde zurücksendet und letztlich der Funkempfänger des gesuchten Teilnehmers (T2) nach dem Empfang dieser eigenen Teilnehmernummer ein Signal für den mobilen Teilnehmer abgibt, dadurch gekennzeichnet, daß der Funkempfänger seine Teilnehmernummer von einem zwischengeschalteten, stationären Sendeempfänger (SE) erhält, der zusammen mit weiteren, über eine Fläche verteilten Sendeempfängern die vom Satelliten (SAT) flächendeckend abgestrahlten, gesuchten Teilnehmernummern empfängt, und daß den stationären Sendeempfängern (SE) jeweils zu versorgende Nahbereiche (A, B, C) zugeordnet sind und wenigstens drei Sendeempfänger (SE), die jeweils einander benachbarte Nahbereiche (A, B, C) versorgen, im Gleichwellenfunkbetrieb senden, wobei die Nahbereiche (A, B, C) jeweils nur so groß sind, daß in einander benachbarten Nahbereichen die Differenz der Laufzeiten der Teilnehmernummer von den Sendeempfängern (SE) dieser Nahbereiche zu einem mobilen Funkempfänger (T2) bezüglich zu befürchtender Interferenzstörungen in einer vernachlässigbaren Größenordnung bleibt.

2. Verfahren nach Anspruch 1, dadurch gekennzeichnet, daß dem Funkempfänger des mobilen Teilnehmers (T2) neben seiner eigenen Teilnehmernummer auch die Teilnehmernummer des rufenden, ortsfesten Teilnehmers (T1) übermittelt und dort zur Anzeige gebracht wird.

3. Verfahren nach Anspruch 1 und 2, dadurch gekennzeichnet, daß es zum Aufbau einer Fernsprechverbindung von einem Fernsprechnetz zu einem mobilen Fernsprechteilnehmer benutzt wird, wobei das durch den Aufbau ermöglichte Ferngespräch dann über eine terrestrische Funkverbindung abgewickelt wird.

4. Verfahren nach einem der vorangehenden Ansprüche, dadurch gekennzeichnet, daß in der flächendeckend vom Satelliten versorgten Fläche diese Versorgung auf ein und derselben Trägerfrequenz stattfindet.

5. System zur Durchführung des Verfahrens nach einem der vorangehenden Ansprüche mit einem ortsfesten Fernsprechnetz mit wenigstens einer Rufzentrale (RZ), die zur Rufweiterleitung mit einer Erdfunkstelle (EFSt) verbunden ist, sowie mit einem zugeordneten Satelliten (SAT), der als Relaisstelle dient zur Wiederaussendung von Rufsignalen für mobile Funkempfänger, die jeweils einen durch einen selektiven Ruf auslösbaren Signalgeber aufweisen, dadurch gekennzeichnet, daß mehrere, über eine Fläche verteilte Sendeempfänger (SE) vorgesehen sind zum Empfang und zur Weiterleitung der vom Satelliten (SAT) abgestrahlten und von den mobilen Funkempfängern (T2) lediglich mittelbar über die Sendeempfänger zu empfangenden Rufsignale, und daß die Sender wenigstens dreier einander benachbarter Sendeempfänger (SE) für dieselbe Trägerfrequenz (f₃) vorgesehen sind, wobei die jeweils von diesen Sendeempfängern zu versorgenden Nahbereiche (A, B, C) jeweils nur so groß bemessen sind, daß in ihnen die Differenz der Laufzeiten der Teilnehmernummer von den Sendeempfängern (SE) dieser Nahbereiche zu einem mobilen Funkempfänger (T2) bezüglich zu befürchtender Interferenzstörungen in einer vernachlässigbaren Größenordnung bleibt.

**Claims**

1. Method of establishing a connection between a stationary subscriber connected to a telephone system and a mobile subscriber equipped with a radio receiver, wherein said stationary subscriber (T1) dials a call center (RZ) connected with the telephone system, giving the subscriber number of the desired mobile subscriber (T2), said call center relays the desired subscriber number to a ground radio station (EFSt) from where it is directionally transmitted to a satellite (SAT), whereupon the satellite retransmits the subscriber number to the ground, and ultimately the radio receiver of the desired subscriber (T2), after receiving its own subscriber number, emits a signal for the mobile subscriber, characterized in that the radio receiver receives its subscriber number from an intermediately connected, stationary transceiver (SE) which, together with further transceivers distributed over a region, receives the desired subscriber numbers transmitted by the satellite (SAT) so as to cover the area ; and each stationary transceiver (SE) has an associated local region (A, B, C) ; and at least three transceivers (SE), each supplying mutually adjacent local regions (A, B, C) operate at a common frequency, with the local regions (A, B, C) being only large enough so that in mutually adjacent local regions the difference between the delays in transmission of the subscriber number from the transceivers (SE) of these local regions to a mobile radio receiver (T2) remains in a negligible order of magnitude with respect to interference to be encountered.

2. Method according to claim 1, characterized in that the radio receiver of the mobile subscriber (T2) receives, in addition to its own subscriber number, also the subscriber number of the calling, stationary subscriber (T1) and displays it.

3. Method according to claims 1 and 2, characterized in that it is used to establish a telephone connection between a telephone system and a mobile telephone subscriber, with the telephone conversation made possible by the connection then being effected by way of a terrestrial radio connection.

4. Method according to one of the preceding claims, characterized in that this coverage in the region covered by the satellite is effected on one and the same carrier frequency.

5. System for implementing the method according to one of the preceding claims employing a stationary telephone system which includes at least one call center (RZ) connected for the transmission of calls with a ground radio station (EFSt) and further including an associated satellite (SAT) which serves as a relay station for the retransmission of call signals for mobile radio receivers, each mobile radio receiver being equipped with a signal generator actuated by a selective call signal, characterized in that a plurality of transceivers (SE) are provided and are distributed over a region for the reception and retransmission of call signals transmitted by the satellite (SAT) and received by the mobile radio receivers (T2) only indirectly via the transceivers ; and the transmitters of at least three adjacent transceivers (SE) are provided for the same carrier frequency ($f_3$), with the local regions (A, B, C) to be supplied by said transceivers being only large enough to keep the difference in the delays in transmission of the subscriber number from the transceivers (SE) of these local regions to a mobile radio receiver (T2) in a negligible order of magnitude with respect to interference to be encountered.

## Revendications

1. Procédé pour l'établissement d'une liaison entre un abonné fixe, relié à un réseau téléphonique, et un abonné mobile équipé d'un radiorécepteur, l'abonné fixe (T1) appelant, avec indication du numéro de l'abonné mobile recherché (T2), un central d'appel (RZ) relié au réseau téléphonique et transmettant ce numéro d'abonné recherché à une station terrestre (EFSt), d'où il est émis vers un satellite (SAT) qui le réémet vers la terre où le radiorécepteur de l'abonné recherché (T2) émet un signal à l'intention de ce dernier après la réception de son propre numéro d'abonné, ledit procédé étant caractérisé en ce que le radiorécepteur reçoit son numéro d'abonné d'un émetteur-récepteur (SE) fixe interposé qui, en liaison avec d'autres émetteurs-récepteurs répartis sur un territoire, reçoit les numéros des abonnés recherchés, diffusés par le satellite (SAT) sur toute la zone de couverture ; et des zones locales à couvrir (A, B, C) sont affectées chacune aux émetteurs-récepteurs (SE) fixes et trois émetteurs-récepteurs (SE) au moins, couvrant chacun une des zones locales voisines (A, B, C) émettent à fréquence commune, la taille des zones locales (A, B, C) étant limitée de façon que la différence des temps de propagation des numéros d'abonné entre les émetteurs-récepteurs (SE) de ces zones locales et un radiorécepteur mobile (T2) demeure dans lesdites zones d'un ordre de grandeur négligeable pour les perturbations par interférences à redouter.

2. Procédé selon revendication, caractérisé en ce qu'outre le numéro de l'abonné mobile (T2), le numéro de l'abonné fixe (T1) demandeur est transmis au radiorécepteur et affiché sur ce dernier.

3. Procédé selon revendications 1 et 2, caractérisé par son utilisation pour l'établissement d'une liaison téléphonique entre un réseau téléphonique et un abonné mobile, la conversation rendue possible par ledit établissement s'effectuant alors par l'intermédiaire d'une liaison radioélectrique terrestre.

4. Procédé selon une quelconque des revendications 1 à 3, caractérisé par l'utilisation d'une seule fréquence porteuse dans la zone de couverture du satellite.

5. Système pour la mise en oeuvre du procédé selon une quelconque des revendications 1 à 4, avec un réseau téléphonique fixe comportant au moins un central d'appel (RZ) relié pour la transmission des appels à une station terrestre (EFSt), et un satellite (SAT) servant de station relais pour la réémission de signaux d'appel vers des radiorécepteurs mobiles, comportant chacun un générateur de signal déclenché par un appel sélectif, ledit système étant caractérisé en ce que plusieurs émetteurs-récepteurs (SE) répartis sur un territoire sont prévus pour la réception et la transmission des signaux d'appel diffusés par le satellite (SAT) et que les radiorécepteurs mobiles (T2) doivent recevoir indirectement par l'intermédiaire des émetteurs-récepteurs ; et les émetteurs d'au moins trois émetteurs-récepteurs (SE) voisins sont prévus pour la même fréquence porteuse ($f_3$), la taille des zones locales (A, B, C) à couvrir par ces émetteurs-récepteurs étant limitée de façon que la différence des temps de propagation du numéro d'abonné entre les émetteurs-récepteurs (SE) de ces zones locales et un radiorécepteur mobile (T2) demeure dans lesdites zones d'un ordre de grandeur négligeable pour les perturbations par interférences à redouter.

FIG. 1

FIG. 2

0 144 665